# EUROPEAN PATENT APPLICATION

(11) **EP 1 389 004 A2**
(43) Date of publication of application: **11.02.2004**
(21) Application number: 03254720.0
(22) Date of filing: 28.07.2003
(51) Int. Cl.: H04N 3/15, H04N 5/217

(54) **Noise detection system for scanner**

(30) Priority: 31.07.2002 US 210848
(71) Applicant: Agilent Technologies, Inc., Palo Alto, CA 94306 (US)
(72) Inventor: Corson, John F., Mountain View, CA 94040 (US); Dorsel, Andreas N., Menlo Park, CA 94025 (US); Silman, Debra A., Los Altos, CA 94024 (US)
(74) Representative: Exell, Jonathan Mark

(57) **Abstract**

An optical scanner system scheme is described that enables better detection limits to be reached at the highest resolution of a fluorescent imager. In a scanner that has asymmetric scan qualities, measurement errors are eliminated by a factor that is greater than expected for simply handling random errors through additional sampling. Systematic asymmetries in scan direction are factored out by averaging pixel results obtained from opposite direction scans of the same line and binning them together at the same resolution.

## Description

### FIELD OF THE INVENTION

This invention relates to optical scanners and, more particularly, to efficiently minimizing signal noise or error in scanning approaches.

### BACKGROUND OF THE INVENTION

Optical scanners find use in performing detection for various experiments, assays and the like. They are often used in array analysis systems for detection of surface bound binding complexes in genomic and proteomic applications.

In performing scans, a typical approach is to traverse with an excitation light source back and forth across a microarray slide or substrate obtaining data for each row of features provided in a sequential fashion. Many factors (some of which are described below) must be compensated for to produce results with the fewest errors or lowest error rate possible.

The present invention, accounts for measurement error which had not before been appreciated in scanner systems. Generally, as described in An *introduction to Error Analysis, The Study of Uncertainties in Physical Measurements,* by John R. Taylor, pgs 81-95, University Science Books 1982, statistical uncertainties presented in measurements are represented by random and systematic errors. Experimental uncertainties that can be refined by repeating measurements are called "random" errors. Those that cannot are referred to as "systematic" errors. As commented on by Taylor, the treatment of random errors is quite different from that of systematic errors. Certain statistical methods developed give a reliable estimate of random uncertainties and offer well-defined procedures for reducing them. However, systematic uncertainties are hard to evaluate, and even harder to detect - much less account for or correct. Furthermore, systematic noise sources vary depending on the details of the measurement instrument being used.

As stated in section 4.6 of the above-referenced text book:
There is no simple theory to tell us what to do about systematic errors. In fact, the only theory of systematic errors is that they must be identified and reduced until they are much less than the required precision. However, in a teaching laboratory this is often not possible. It is often not possible to check a meter against a better one in order to correct it, and still less to buy a new meter to replace an inadequate one. For this reason, some teaching laboratories establish a rule that, in the absence of more specific information, meters should be considered to have some definite systematic uncertainty. For example, it might be decided that all stopwatches have up to 0.5 percent systematic uncertainty, all balances up to 1 percent, all voltmeters and ammeters up to 3 percent, and so on.
Yet, with respect to random measurement errors, well-founded analytical/statistical approaches exist that are applicable to the present invention. For a given pixel in the detection system (further described below) many readings of light intensity are, in effect, averaged to produce a result. As such, a certain amount of error is associated with the mean intensity of each pixel.

As taught by Taylor, the best characterization of error in an averaged measurement value is expressed in terms of the "standard deviation of the mean" (sometimes also referred to as the "standard error" or "standard error of the mean"). This quantity is more reliable in quantifying error than simple calculation of the standard deviation for a system because it takes the number of measurements ("N") into account. The uncertainty or error presented by random measurement errors is characterized as equal to the standard deviation that may be calculated divided by the square root of N *(i.e.,* error = standard deviation /N^{½}).

As such, by doubling the number of data points taken in scanning (such as by rescanning the same physical region of the array) random errors in a scanner system should be reduced by sqrt(2), *i.e.,* by a factor of about 1.4. However, in the present invention, the methodology adopted in rescanning has been shown to produce a much greater error reduction.

As such, the present invention is believed to offer a solution for eliminating heretofore unknown systematic errors, thereby dramatically improving scanner precision. The ability to provide these improved scanner results offers a significant advantage in the art to which the present invention most particularly pertains. In a field where intensity readings for array features, for example as produced in Differential Gene Expression testing, can vary by 4 orders of magnitude fundamental error reduction as offered by the present invention can be of great value. This is particularly true at low signal levels which are inherently the most difficult to detect.

According to one aspect of the present invention, there is provided a method according to claim 1.
According to another aspect of the present invention, there is provided a system according to claim 8.
The present invention seeks to provide a method and system for decreasing overall scanning error (including random error "noise" and systematic errors) in an efficient manner. This benefit enables better detection limits, especially at lower scanner resolution limits. The invention may be implemented in the form of a computer program, firmware, digital or analogue electronics or other software or hardware arranged to operate the method, system or the computer program.

In a preferred embodiment of the present invention, certain systematic errors are cancelled-out in scanning routines where the same line or path of array features is scanned in one direction of motion of an excitation light's location on the array and then in the opposite direction, and then corresponding/matching pixels readings are "binned" together. In preferred variations of the present invention, scanning is performed at 5 micron resolution, where 5 micron pixel readings are binned into 5 micron pixel results.

### BRIEF DESCRIPTION OF THE DRAWINGS

Figure 1 is a perspective view of an array package including a substrate carrying a typical array, as may be used in the present invention.

Figure 2 is an enlarged view of a portion of FIG. 1 showing some of the identifiable individual regions of the array of FIG. 1.

Figure 3 is a grossly enlarged cross-section of a portion of FIG. 2;

Figure 4 is a front view of another array package in the form of a cartridge, which may be used in the present invention;

Figure 5 schematically illustrates an apparatus as may be used in the present invention.

Figures 6A - 6C show a known scanning approach in which rows are scanned once and readings therefrom are binned into a lower resolution pixel format.

Figures 7A and 7B show another known scanning approach in which rows are scanned and no binning of the readings/results obtained occurs.

Figures 8A - 8C show a scanning approach of the present invention in which rows are scanned back-and-fourth and readings are binned into same resolution pixels.

### DETAILED DESCRIPTION OF THE INVENTION

In describing the invention in greater detail than provided in the Summary and as informed by the Background above, suitable hardware for use in the invention is first described. This discussion is followed by description of the subject methods and array use.

Before the present invention is described in such detail, however, it is to be understood that this invention is not limited to particular variations set forth and may, of course, vary. Various changes may be made to the invention described and equivalents may be substituted without departing from the true : scope of the invention. In addition, many modifications may be made to adapt a particular situation, material, composition of matter, process, process act(s) or step(s), to the objective(s), or scope of the present invention. All such modifications are intended to be within the scope of the claims made herein.

Methods recited herein may be carried out in any order of the recited events which is logically possible, as well as the recited order of events. Furthermore, where a range of values is provided, it is understood that every intervening value, between the upper and lower limit of that range and any other stated or intervening value in that stated range is encompassed within the invention. Also, it is contemplated that any optional feature of the inventive variations described may be set forth and claimed independently, or in combination with any one or more of the features described herein.

All existing subject matter mentioned herein (*e.g*., publications, patents, patent applications and hardware) is incorporated by reference herein in its entirety except insofar as the subject matter may conflict with that of the present invention (in which case what is present herein shall prevail). The referenced items are provided solely for their disclosure prior to the filing date of the present application. Nothing herein is to be construed as an admission that the present invention is not entitled to antedate such material by virtue of prior invention.

Reference to a singular item, includes the possibility that there are plural of the same items present. More specifically, as used herein and in the appended claims, the singular forms "a," "and," "said" and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

Unless defined otherwise below, all technical and scientific terms used herein have the same meaning as commonly understood by one of ordinary skill in the art to which this invention belongs. Still, certain elements are defined herein for the sake of clarity.

A "biopolymer" is a polymer of one or more types of repeating units. Biopolymers are typically found in biological systems and particularly include polysaccharides (such as carbohydrates), peptides (which term is used to include polypeptides and proteins) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions: Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. Biopolymers include DNA (including cDNA), RNA, oligonucleotides, and PNA and other polynucleotides as described in U.S. Patent No. 5,948,902 and references cited therein (all of which are also incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer *(e.g.,* a single amino acid or nucleotide with two linking groups one or both of which may have removable protecting groups).

An "array," includes any two-dimensional or substantially two-dimensional arrangement of addressable regions bearing a particular chemical moiety or moieties (*e.g.*, biopolymers such as polynucleotide sequences (nucleic acids), polypeptides *(e.g.,* proteins), *etc.)* associated with that region. In the broadest sense, the preferred arrays are arrays of polymeric binding agents, where the polymeric binding agents may be any of: polypeptides, proteins, nucleic acids, polysaccharides, synthetic mimetics of such biopolymeric binding agents, *etc.* In many embodiments of interest, the arrays are arrays of nucleic acids, including oligonucleotides, polynucleotides, cDNAs, mRNAs, synthetic mimetics thereof, and the like. Where the arrays are arrays of nucleic acids, the nucleic acids may be covalently attached to the arrays at any point along the nucleic acid chain, but are generally attached at one of their termini (*e.g*. the 3' or 5' terminus). Sometimes, the arrays are arrays of polypeptides, *e.g.,* proteins or fragments thereof.

An array is "addressable" when it has multiple regions of different moieties *(e.g.,* different polynucleotide sequences) such that a region *(i.e.,* a "feature" or "spot" of the array) at a particular predetermined location (*i.e.*, an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probe" may be the one which is to be evaluated by the other (thus, either one could be an unknown mixture of polynucleotides to be evaluated by binding with the other). A "scan region" refers to a contiguous (preferably, rectangular) area in which the array spots or features of interest, as defined above, are found. The scan region is that portion of the total area illuminated from which the resulting fluorescence is detected and recorded. For the purposes of this invention, the scan region includes the entire area of the slide scanned in each pass of the lens, between the first feature of interest, and the last feature of interest, even if there exist intervening areas which lack features of interest. An "array layout" refers to one or more characteristics of the features, such as feature positioning on the substrate, one or more feature dimensions, and an indication of a moiety at a given location. "Hybridizing" and "binding", with respect to polynucleotides, are used interchangeably.

By "remote location," it is meant a location other than the location at which the array is present and hybridization occurs. For example, a remote location could be another location *(e.g.,* office, lab, *etc.)* in the same city, another location in a different city, another location in a different state, another location in a different country, *etc.* As such, when one item is indicated as being "remote" from another, what is meant is that the two items are at least in different rooms or different buildings, and may be at least one mile, ten miles, or at least one hundred miles apart. "Communicating" information references transmitting the data representing that information as electrical signals over a suitable communication channel *(e.g.,* a private or public network). "Forwarding" an item refers to any means of getting that item from one location to the next, whether by physically transporting that item or otherwise (where that is possible) and includes, at least in the case of data, physically transporting a medium carrying the data or communicating the data. An array "package" may be the array plus only a substrate on which the array is deposited, although the package may include other features (such as a housing with a chamber). A "chamber" references an enclosed volume (although a chamber may be accessible through one or more ports). It will also be appreciated that throughout the present application, that words such as "top," "upper," and "lower" are used in a relative sense only.

A "processor" references any hardware and/or software combination which will perform the functions required of it. For example, any processor herein may be a programmable digital microprocessor such as available in the form of a electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

### Hardware

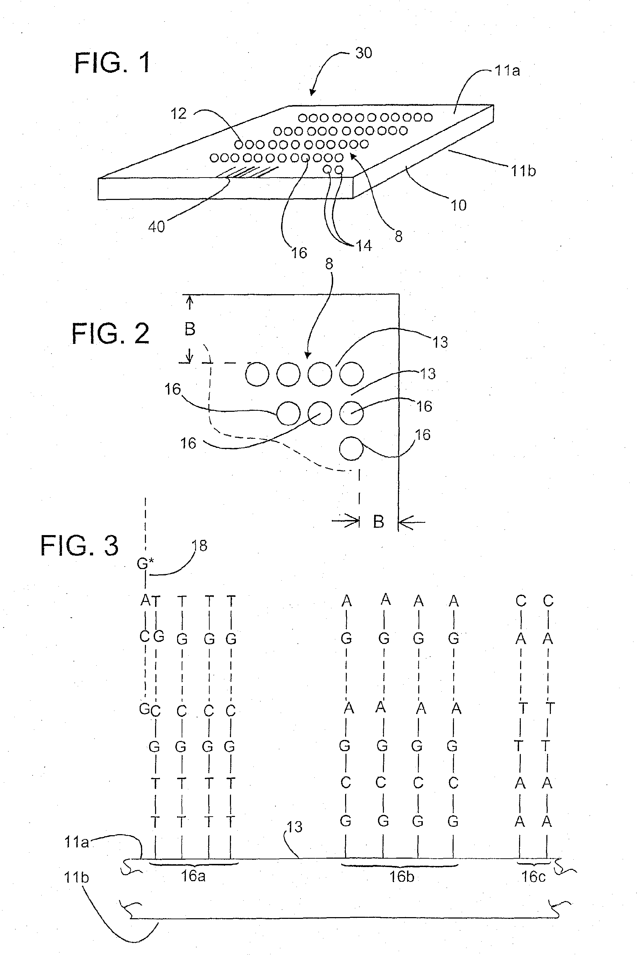

Turning now to the figures, FIGs 1-3 show an array in the form of a contiguous, substantially planar substrate 10 that carries multiple probe features 16 disposed across a first surface 11a of substrate 10 separated by interfeature areas 13. The substrate is preferably made of transparent material to facilitate data acquisition scanning there through. Alternatively, the substrate could be scanned from the side which carries the array. Features 16 are shown disposed in a pattern which defines the array. The extent of the pattern defines the scan region 8. A second surface 11b of substrate 10 does not carry any features. Substrate 10 may be of any shape although the remainder of any package carrying substrate 10, and the apparatus of the present invention, may need to be adapted accordingly.

A typical array usually includes at least two distinct polymers that differ by monomeric sequence immobilized on *(i.e.,* covalently or non-covalently attached to) different and known locations on the substrate surface, where a space between each location or feature may or may not be present. Each distinct polymeric sequence of the array is typically present as a composition of multiple copies of the polymer on the substrate surface (*e.g*,. as a spot or feature 16 on the surface of the substrate). The number of distinct polymeric sequences, and hence probe features 16, present on the slide or substrate may vary, but is generally at least 10, where the number may be as high as at least 50, 100, 500, 1000 or 10,000. The density of features present on the array surface may vary, but will generally be at least about 10 and usually at least about 100 spots/cm², where the density may be as high as 10⁶ or higher, but will generally not exceed about 10⁵ spots/cm².

While all probe features 16 may be of different composition, some could be the same (*e.g*., when any repeats of each feature composition are excluded the remaining features may account for at least 5%, 10%, or 20% of the total number of features). In any event, each feature carries probes in the form of a one moiety or mixture of moieties, which in the case of each feature 16 in FIGs 1-3 is preferably a polynucleotide having a particular sequence, while interfeature areas 13 do not carry any moieties of a type the same as the features 16 (*i.e.*, no polynucleotides in the case of features 16 carrying polynucleotides).

Such an array configuration is illustrated schematically in FIG. 3 where regions 16 are shown as carrying different polynucleotide sequences. Probe features 16 may have widths (that is, diameter, for a round spot) of at least 5 or 10 µm, and usually less than 1.0 cm. In embodiments where very small spot sizes or feature sizes are desired, each of the features 16 may have widths of at least 1.0 µm and less than 1.0 mm, usually less than 500 µm, and more usually less than 200 µm. Features that are not round may have areas equivalent to the area ranges of round probe features 16 resulting from the foregoing diameter ranges. The probes of features 16 are typically linked to substrate 10 through a suitable linker (not shown).

Control features 14 on substrate 10 may be included together with the probe features, or in independent region(s) as shown in FIG 1. The physical characteristics of the control features may be like those of the probe features, or otherwise. In any case, the control features are designed so that they will exhibit certain predetermined fluorescence intensity properties when scanned.

A first option is that a single control feature 14 may be provided for each scanner channel. For example, a Cy3 and a Cy5 control feature may be provided. In which case, the set of features will typically be configured to present intensities at a known or expected ratio (usually 1:1) when the scanner system is configured properly. This may include control features that result in an absolute signal level. It is further contemplated that more than one controls feature may be provided for each channel. In which case, the controls may be configured to result in different expected or relative intensities when scanned. Details as to the use or application of such control, features in system tuning are described in U.S. Patent .Application Atty. Docket No. 10020048-1, entitled "Automated Sensitivity Setting and Sample Rescanning". Other options or aspects regarding determining optimal scanner settings may be appreciated in connection with U.S. Patent Application Atty. Docket No. 10011208-1, entitled "Array Scanner Control System."

As to array 12, it may cover an area of less than 100 cm², or even less than 50, 10 or 1 cm². In many embodiments, substrate 10 will be shaped generally as a rectangular solid (although other shapes are possible), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 and less than 1 mm.

Usually, borders "B" around scan region 8 less than about 5-15 mm are provided. It is often desirable to lay down features as close to the edge of the substrate as possible so as to maximize the number of different probes that may be displayed on a given surface area. As such, in many array configurations, the width of a border, if present, does not exceed about 20 mm, usually does not exceed about 10 mm and more usually does not exceed about 5 mm.

An array identifier 40 in the form of a bar code in FIG 1, is preferably associated with the array 12, provided on the same substrate 10 adjacent one of the arrays 12. In the case where more than one array 12 is present on the same substrate 10, a separate identifier can be provided adjacent each corresponding array 12 if desired. Identifier 40 may either contain information on the layout of array 12 or be linkable to a file containing such information in a manner such as described in U.S. Patent No. 6,180,351. Each identifier 40 for different arrays may be unique so that a given identifier will likely only correspond to one array 12 or to a plurality of arrays 12 on a given substrate 10. This configuration can be accomplished by making identifier 40 sufficiently long and incrementing or otherwise varying it for different arrays 12 or arrays 12 on the same substrate 10, or even by selecting it to be globally unique in a manner in which globally unique identifiers are selected as described in U.S. Patent No. 6,180,351.

Arrays such as those of FIGs. 1-3 can be fabricated using drop deposition from pulse-jets of either polynucleotide precursor units (such as monomers) in the case of *in situ* fabrication, or a previously obtained polynucleotide. Such methods are described in detail in, for example, the previously cited references including U.S. Patent Nos. 6,242,266, 6,232,072, 6,180,351, 6,171,797, 6,323,043, U.S. Patent Application Serial No. 09/302,898 filed April 30, 1999 by Caren, *et al.,* and the references cited therein. Other drop deposition methods can be used for fabrication, as well. Also, instead of drop deposition methods, other array fabrication method may be used including pin spotting and the techniques described in U.S. Patent Nos. 5,599,695, 5,753,788, and 6,329,143.

Inter-feature areas 13 need not be present particularly when the arrays are made by light directed methods as described in those patents. In use, a feature can detect a polynucleotide of a complementary sequence by hybridizing to it, such as polynucleotide 18 being detected by feature 16a in FIG. 3 (the "*" on polynucleotide 18 indicating a label such as a fluorescent label). Use of arrays to detect particular moieties in a sample (such as target sequences) are well known. The layer thickness of the probes at features 16, together with any detected target to which they are bound, is often less than 500 nm thick, and often less than 200, 100, 50 or 20 nm in thickness.

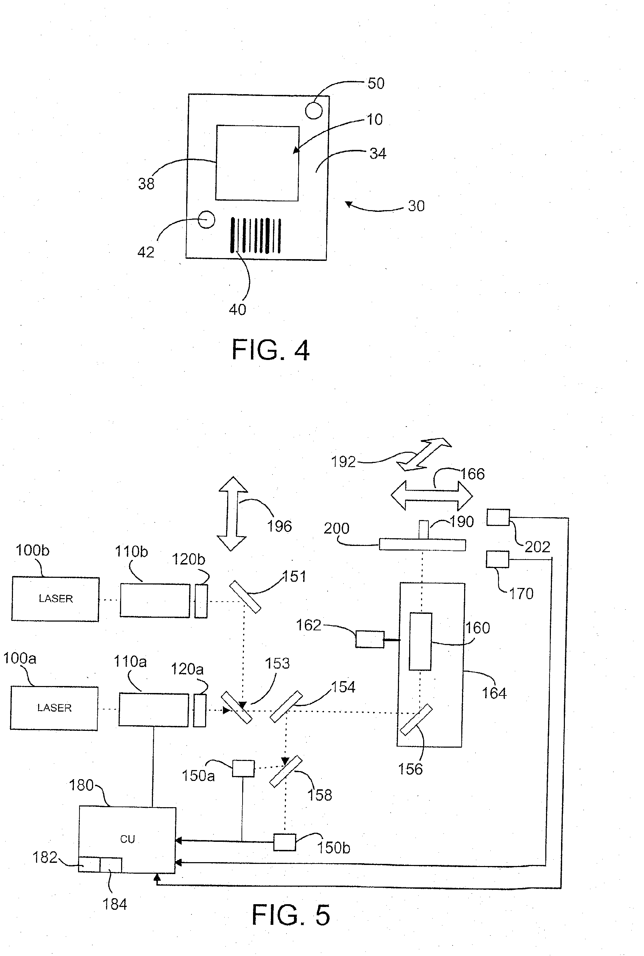

Referring now to FIG 4, an array package 30 may include a housing 34 which has received substrate 10 adjacent an opening. Substrate 10 is sealed (such as by the use of a suitable adhesive) to housing 34 around a margin 38 with the second surface 11b facing outward. Housing 34 is configured such that housing 34 and substrate 10, define a chamber into which features 16 of array 12 face. This chamber is accessible through resilient septa 42, 50 which define normally closed ports of the chamber. In this case, array package 30 may be associated with the identifier 40 by providing identifier 40 on housing 34. Such association of any these or other items with the array, can be accomplished, for example, by the items being present in the same package as the array when shipped to an end user.

The components of the embodiments of either array package 30 described above, may be made of any suitable material. For example, housing 34 can be made of metal or plastic such as polypropylene, polyethylene or acrylonitrile-butadiene-styrene ("ABS"). Substrate 10 may be of any suitable material, and is preferably sufficiently transparent to the wavelength of an interrogating and array emitted light, as to allow interrogation from its underside whether situated in a housing 34 or not. Such transparent and non-transparent materials include, for flexible substrates: nylon, both modified and unmodified, nitrocellulose, polypropylene, and the like. For rigid substrates, specific materials of interest include: glass; fused silica, silicon, plastics *(e.g.,* polytetrafluoroethylene, polypropylene, polystyrene, polycarbonate, and blends thereof, and the like); metals *(e.g.,* gold, platinum, and the like).

The first surface 11a of substrate 10 may be modified with one or more different layers of compounds that serve to modify the properties of the surface in a desirable manner. Such modification layers, when present, will generally range in thickness from a monomolecular thickness to about 1 mm, usually from a monomolecular thickness to about 0.1 mm and more usually from a monomolecular thickness to about 0.001 mm. Modification layers of interest include: inorganic and organic layers such as metals, metal oxides, polymers, small organic molecules and the like. Polymeric layers of interest include layers of: peptides, proteins, polynucleic acids or mimetics thereof (for example, peptide nucleic acids and the like); polysaccharides, phospholipids, polyurethanes, polyesters, polycarbonates, polyureas, polyamides, polyethyleneamines, polyarylene sulfides, polysiloxanes, polyimides, polyacetates, and the like, where the polymers may be hetero- or homopolymeric, and may or may not have separate functional moieties attached thereto (for example, conjugated). The materials from which substrate 10 and housing 34 (at least the portion facing toward the inside of chamber 36) may be fabricated should ideally themselves exhibit a low level of binding during hybridization or other events.

Referring now to FIG. 5, an apparatus as may be used in the present invention (which may be generally referenced as an array "scanner") is illustrated. A light system provides light from a laser 100 which passes through an electro-optic modulator (EOM) 110 with attached polarizer 120. Each laser 100a, 100b may be of different wavelength (*e.g*., one providing red light and the other green) and each has its own corresponding EOM 110a, 110b and polarizer 120a, 120b. The beams may be combined along a path toward a holder or caddy 200 by the use of full mirror 151 and dichroic mirror 153. A control signal in the form of a variable voltage applied to each corresponding EOM 110a, 110b by the controller (CU) 180, changes the polarization of the exiting light which is thus more or less attenuated by the corresponding polarizer 120a, 120b. Controller 180 may be or include a suitably programmed processor. Thus, each EOM 110 and corresponding polarizer 120 together act as a variable optical attenuator which can alter the power of an interrogating light spot exiting from the attenuator. The remainder of the light from both lasers 100a, 100b is transmitted through a dichroic beam splitter 154, reflected off fully reflecting mirror 156 and focused onto either an array 12 of an array package 30 mounted on holder 200, or a calibration member 230, whichever is at a reading position, using optical components in beam focuser 160. Light emitted (in particular, fluorescence) at two different wavelengths (*e.g*., green and red light) from features 16, in response to the interrogating light, is imaged using the same optics in focuser/scanner 160, and is reflected off mirrors 156 and 154. The two different wavelengths are separated by a further dichroic mirror 158 and are passed to respective detectors 150a and 150b.

More optical components (not shown) may be used between the dichroic and each detector 150a, 150b (such as lenses, pinholes, filters, fibers, *etc.)* and each detector 150a, 150b may be of various different types (*e.g.*, a photo-multiplier tube (PMT) or a CCD or an avalanche photodiode (APD)). All of the optical components through which light emitted from an array 12 or calibration member 230 in response to the illuminating laser light, passes to detectors 150a, 150b, together with those detectors, form a detection system. A scan system causes the illuminating region in the form of a light spot from each laser 100a, 100b, and a detecting region of each detector 150a, 150b (which detecting region will form a pixel in the detected image), to be scanned across multiple regions of an array or array package 30 mounted on holder 200. The scanned regions for an array 12 will include at least the multiple features 16 of the array. In particular, a scanning system operated according to the present invention is typically a line-by-line scanner, scanning the interrogating light in a line across an array when at the reading position in the direction of arrows 166, first in one direction and back in the opposite direction, then moving ("transitioning") the interrogating light in a direction into/out of the paper as depicted by arrow(s) 192 as viewed in FIG 5 to a position at an end of a next line, and repeating the line scanning and transitioning until the entire array 12 has been scanned. In contrast, known approaches to line-by-line scanning merely involve scanning in one direction, transitioning and then reversing direction to scan another line. In other words, each line is scanned only once instead of at least twice as taught herein.

Scanning is typically accomplished by providing a housing 164 containing mirror 158 and focuser 160, which housing 164 can be moved along a line of pixels *(i.e.,* from. left to right or the reverse as viewed in FIG. 5) by a transporter 162. The second direction 192 of scanning (line transitioning) can be provided by second transporter which may include a motor and belt (not shown) to move caddy 200 along one or more tracks. The second transporter may use a same or different actuator components to accomplish coarse (a larger number of lines) movement and finer movement (a smaller number of lines). Generally, directly adjacent rows are scanned. However, "adjacent" rows may include alternating rows or rows where more than one intervening row is skipped.

The scanner of FIG 5 may further include a reader (not shown) that reads an identifier 40 from an array package 30. When identifier 40 is in the form of a bar code, that reader may be a suitable bar code reader.

Of course, the movements 166 and 192 may be accomplished by actuating holder 200 or housing 164 alone. Still further, the movement roles described for each element above may be swapped.

An autofocus detector 170 is generally provided to sense any offset (variation in slope) between different regions of array 12 when in the reading position, and a determined position of the focal plane of the detection system. The autofocus system includes detector 170, processor 180, and a motorized or servo-controlled adjuster 190 to move holder 200 in the direction of arrow 196 to establish correct focus for the system. The detector may directly detect a partial reflection from another beamsplitter (not shown) between splitters 153 and 154. In addition, a second position detector 202, also feeding back to the CU, preferably measures the absolute position *(i.e.,* relative to the apparatus) of the servo-controlled adjuster 190). As above with respect to movements 166 and 192, it should be observed that focus servo control movement indicated by arrows(s) 196 may occur in connection with housing 164 instead of the holder. Further details regarding suitable chemical array autofocus hardware is described in pending U.S. patent application Serial No. 09/415,184 for "Apparatus And Method For Autofocus" by Dorsel, *et al.,* filed Oct. 7, 1999, as well as European publication EP 1091229 published April 11, 2001 to the same title and inventors. In addition, details regarding maintaining or setting lens focus upon changing direction may be appreciated in U.S. Patent Application Attorney Docket No. 10020373-1, entitled "Bi-Directional Scanner Control System," filed February 28, 2001 which provides algorithms to account for variability in assay slide slope.

In any case, array orientation and configuration is of little consequence since focus can be set to features 16 either directly, or looking through a transparent substrate medium if the array is inverted for scanning (for instance, when upper surface 11a is blocked-off with housing features and surface 11b is exposed).

Controller 180 of the apparatus is connected to receive signals from detectors 150a, 150b, these different signals corresponding to different "channels", i.e. signals which results at each of the multiple detected wavelengths from emitted light for each scanned region of array 12 when at the reading position mounted in holder 200. Controller 180 also receives the signal from autofocus offset detector 170 and absolute servo position detector 202, and provides the control signal to EOM 110, and controls the scan system. Controller 180 may also analyze, store, and/or output data relating to emitted signals received from detectors 150a, 150b in a known manner.

Controller 180 may include a computer in the form of a programmable digital processor, and include a media reader 182 which can read a portable removable media (such as a magnetic or optical disk), and a communication module 184 which can communicate over a communication channel (such as a network, for example the internet or a telephone network) with a remote site (such as a database at which information relating to array package 30 may be stored in association with the identification 40).

Controller 180 is suitably programmed to execute all of the steps required by it during operation of the apparatus, as discussed further below. Alternatively, controller 180 may be any hardware or hardware/software combination which can execute those steps.

In one mode of operation, the array in package 30 is typically first exposed to a liquid sample. This liquid sample may be placed directly on substrate 10 or introduced into a chamber through one of the septa 42, 50. The array may then be washed and scanned with a liquid (such as a buffer solution) present in the chamber and in contact with the array, or it may be dried following washing.

After mounting a given array package 30 in cradle 200 (either with the array features on the glass surface nearer to, or further from, the lens - depending, at least, upon the lens setup) the identifier reader may automatically (or upon operator command) read array ID 40, and use this to retrieve information on the array layout. Such information may be retrieved directly from the contents of identifier 40 when it contains such information. Alternatively, identifier 40 may be used to retrieve such information from a database containing the identifier in association with such information. Such a database may be a local database accessible by controller 180 (such as may be contained in a portable storage medium in drive 182 which is associated with package 30, such as by physical association with package 30 when received by the user, or by a suitable identification), or may be a remote database accessible by controller 180 through communication module 184 and a suitable communication channel.

The saved results from a sample exposed array, read by the scanner set according to the methodology described in detail below, may be raw results (such as fluorescence intensity readings for each feature in one or more color channels) or may be processed results such as obtained by rejecting a reading for a feature which is below a predetermined threshold and/or forming conclusions based on the pattern read from the array (such as whether or not a particular target sequence may have been present in the sample). The results of the reading (processed or not) may be forwarded (such as by communication of data representing the results) to a remote location if desired, and received there for further use (such as further processing).

Substrate 10 may actually carry more than one array 12, arranged as desired. While the substrate shown is planar and rectangular in form, other shapes may also be used - with optional housing 34 being adjusted accordingly. Still, in many embodiments, substrate 10 will be shaped generally as a planar, rectangular solid, having a length in the range about 4 mm to 200 mm, usually about 12 mm to 150 mm, more usually about 20 mm to 80 mm; a width in the range about 4 mm to 200 mm, usually about 10 mm to 80 mm and more usually about 10 mm to 30 mm; and a thickness in the range about 0.01 mm to 5.0 mm, usually from about 0.1 mm to 2 mm and more usually from about 0.9 to 1.2 mm. However, larger substrates can be used. Additionally, during scanning it is possible to illuminate all pixels of a line simultaneously (for example, by using a line of light emitting diodes).

### Methodology

In a scanner system, such as the Agilent Technologies (Palo Alto, CA) G2505 AGILENT MICRO ARRAY SCANNER, scanning may be accomplished at two different resolutions: 10 microns and 5 microns. Results produced with 10 micron scans are composed by scanning two 5-micron rows. The 10 micron scan approach does not form part of the invention, but is described in order to illustrate the distinction between it and that of the present invention.

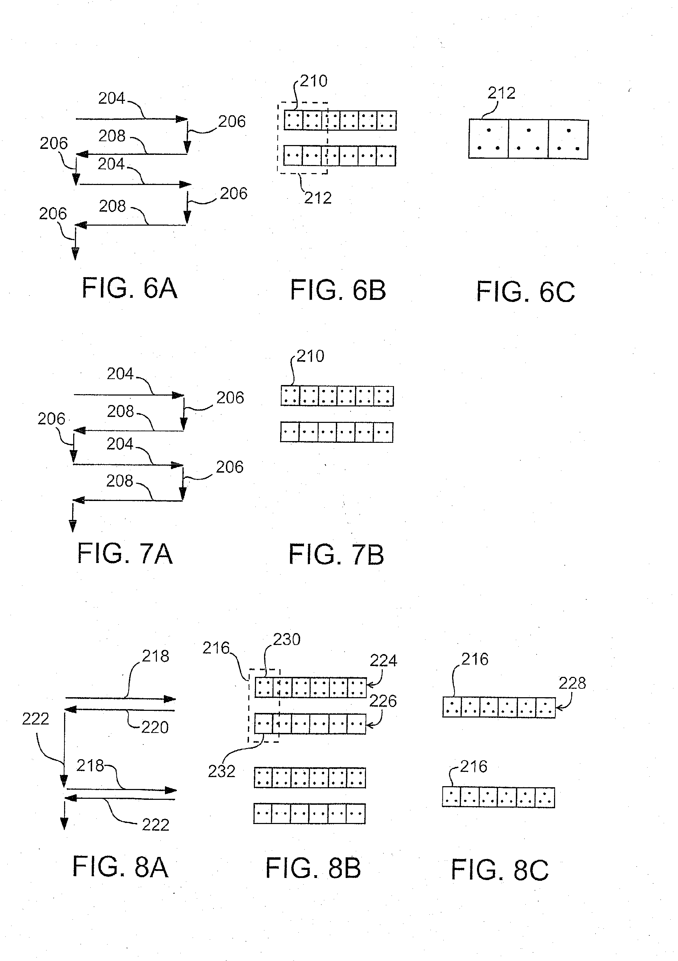

Referring to FIGs 6A-6C, a known 10 micron scale scanning approach is shown. Scan 204 is performed along a first row at 5 microns resolution in a first direction scanning from, *e.g*., left to right. Following this, a second, typically, orthogonal (or close to orthogonal) movement 206 occurs, moving, *e.g*., down by 5 microns. Then, scan 208 at 5 micron resolution occurs in the opposite direction, eg, scanning from right to left. As shown in FIG 6B, two groups of 5 micron pixels 210 are obtained. These groups of pixels are from regions on the array separated by 5 microns vertically in the example. As illustrated in FIG 6C, 2-by-2 sets of 5 micron pixels 210 are "binned" into one 10 micron pixels 212. Such an approach is also applicable to other scan motion arrangements, the transfer being within the abilities of those skilled in the art.

The intensity of the initial scan results in each of FIGs 6B, 7B and 8B and binned scan results 6C and 8C are indicated by stippling. The binned pixel results shown in FIG 6C are shown at an averaged value (as they are in FIG 8C), though the binning may operate in a an additive manner. In which case, the intensity of the 10 micron pixels 212 and pixels 216 in FIG 8C will be a greater intensity. In any case, the binning results in pixels having an intensity that represents an averaged or combined effect of the various scans.

Referring now to FIGs 7A and 7B, a known approach for accomplishing 5 micron resolution scans is shown. The same scan movement stages occur as in FIG 6A to produce identical pixel data, however, no binning of results into larger pixels is undertaken.

Scanner readings/binned results will be produced for each fluorophore/scanner channel used. This may occur by running scans as shown in a sequential fashion for each color or by simultaneously taking multiple color measurements using each scanner channel. This is true for the known methodology just described or the invention methodology which, otherwise proceeds in a different manner.

Referring to FIGs 8A-8C, the approach of the present invention is shown. A first distinction between the present invention and the known approaches just illustrated is that in the present invention each scan row is scanned twice. As shown in FIG 8A, a first row is checked by a scan 218 in one direction and a scan 220 tracking back along the same path (*e.g*., left to right and back right to left) before transition movement 222 to a next scan row. After moving to another row (typically, up or down), scans are again made moving back and forth along substantially the same path. To scan an entire array, the process continues to repeat.

In the referenced Agilent scanner, this scanning methodology occurs at 5 micron resolution, where 5 micron by 5 micron pixel results are produced moving by 5 microns in each transitiong movement between scanned rows. However, the invention is applicable to other scanner resolution settings.

Still further, as long as each row is scanned an even number (2, 4, *6, etc.)* of times more repetitive approaches may be used. Note, however, that running higher numbers of scans is time consuming and can produce photobleaching that may adversely affect results. Also, extra scans (in even numbers) above two do not offer any added reduction in systematic noise.

Whatever the number of repetitive line scans, the reason for adhering to even multiples according to the present invention is the manner in which multiple intermediate scan row results 224, 226 are combined as in FIG 8B. Here, a first set of scanned pixel results 224 is binned with a second set 226, producing a combined set 228 of pixels results 216. Pixels 230 and 232 from successive scans of the same row that are binned together are "matched" or "corresponding" in that they correspond to readings taken of the same array feature(s)/location(s), but with the scanner running opposite direction. Upon binning, differences in pixel intensity due to systematic errors dependent on scan direction are, in effect, cancelled out as over-bright and under-bright results are combined.

In contrast, running an odd number of scans per line would not produce fully-complementary or matched pixels to be binned together. Such an approach will always have one extra over-bright or under-bright result to factor in that includes the systematic bias that the present invention eliminates.

Note that, in order to bin each leftward moving 5-micron pixel with its matching rightward moving 5-micron pixel, positional accuracy of the scanner used is very important. When scanning an array that has signal variations that change over 4 orders of magnitude with a length scale of 5 to 100 microns, pixel placement error greater than the system's resolution limit *(i.e.,* random placement error more than one pixel - 5 microns in the example provided) would introduce its own error that could exceed the reduction in systematic variation due to the averaging offered by the present invention. The exemplary placement accuracy needed for practicing the present invention is offered by the above-referenced Agilent scanner.

In running a scanner according to the subject methodology, any number of potential systematic error factors can be cancelled-out. A first potential factor involves phosphorescence. Upon study of the referenced scanner system, phosphorescence was seen to be coming from the plastic slide holder, the glass of the microscope slide and the glass of the scan lens itself. The amount of phosphorescent light which reaches the detector may depend on the direction of motion of the scan stage. This could be due to asymmetry in the detection optics, possibly as a result of the collection efficiency of a high numerical aperture scan lens when the phosphorescence is passing through the center or edge of the scan lens, combined with symmetry breaking off-axis elements or illuminating beams or detection light bundles. Also, the referenced Agilent scanner employs a noise reducing optic described in U.S. Patent No. 6,222,664 that may introduce additional asymmetry, by asymmetrically obscuring portions of the detection light path. Another factor may involve medium time scale gain changes in the detector *(i.e.,* PMT). A gain change with a time constant of about 5 ms in the PMT was observed due to bright signals altering the voltage distribution across the PMT voltage divider, making the detector signal dependent on the illumination intensity of features which precede it. This characteristic is believed to introduce another layer of directional asymmetry, especially near the edges of the scan or near the edges of bright features. Yet another potential cause of directional asymmetry that may be addressed by this invention concerns dynamic autofocus potentially showing direction-dependent autofocus error components, *e.g.,* due to lag in tracking a sloped sample.

### Array Use

The subject methods and systems find use in a variety of different applications, where such applications are generally arrays based analyte detection applications in which the presence of a particular analyte in a given sample is detected at least qualitatively, if not quantitatively, using an array based protocol. Protocols for carrying out such assays are well known to those of skill in the art and need not be described in great detail here. Generally, the sample suspected of comprising the analyte of interest is contacted with an array under conditions appropriate for the analyte to bind to its respective binding pair member that is present on the array. Thus, if the analyte of interest is present in the sample, it binds to the array at the site of its complementary binding member and a complex is formed on the array surface. The presence of this binding complex on the array surface is then detected, *e.g.* through use of a signal production system, *e.g.* an isotopic or fluorescent label present on the analyte, *etc.* The presence of the analyte in the sample is then deduced from the detection of binding complexes on the substrate surface.

Specific analyte detection applications of interest include hybridization assays in which nucleic acid arrays are employed. In these assays, a sample of target nucleic acids is first prepared, where preparation may include labeling of the target nucleic acids with a label, *e.g.* a member of signal producing system. Following sample preparation, the sample is contacted with the array under hybridization conditions, whereby complexes are formed between target nucleic acids that are complementary to probe sequences attached to the array surface. The presence of hybridized complexes is then detected. Specific hybridization assays of interest which may be practiced include: gene discovery assays, differential gene expression analysis assays; nucleic acid sequencing assays, and the like. U.S. Patent Nos. describing methods of using arrays in various applications include: 5,143,854; 5,288,644; 5,324,633; 5,432,049; 5,470,710; 5,492,806; 5,503,980; 5,510,270; 5,525,464; 5,547,839; 5,580,732; 5,661,028; 5,800,992; the disclosures of which are herein incorporated by reference.

Where the arrays are arrays of polypeptide binding agents, *e.g.*, protein arrays, specific applications of interest include analyte detection/proteomics applications, including those described in: 4,591,570; 5,171,695; 5,436,170; 5,486,452; 5,532,128; and 6,197,599; the disclosures of which are herein incorporated by reference; as well as published PCT application Nos. WO 99/39210; WO 00/04832; WO 00/04389; WO 00/04390; WO 00/54046; WO 00/63701; WO 01/14425; and WO 01/40803; the disclosures of the United States priority documents of which are herein incorporated by reference.

As noted above, in certain embodiments, the subject methods include a step of transmitting data from at least one of the detecting and deriving steps, as described above, to a remote location. The data may be transmitted to the remote location for further evaluation and/or use. Any convenient telecommunications means may be employed for transmitting the data, *(e.g.,* facsimile, modem, intemet, *etc.)*

As such, the array will typically be exposed to a sample (*e.g*., a fluorescently labeled analyte such as a protein containing sample) and the array then read according to the methodology described above. Other suitable apparatus and methods are described in U.S. patent application Serial Nos.: 09/846125 "Reading Multi-Featured Arrays" by Dorsel, *et al.;* and Serial No. 09/430214 "Interrogating Multi-Featured Arrays" by Dorsel, *et al.* As previously mentioned, these references are incorporated herein by reference as are all other references cited herein.

Results from the reading may be raw results (such as fluorescence intensity readings for each feature in one or more color channels) or may be processed results such as obtained by rejecting a reading for a feature which is below a predetermined threshold and/or forming conclusions based on the pattern read from the array (such as whether or not a particular target sequence may have been present in the sample). The results of the reading (processed or not) may be forwarded (such as by communication) to a remote location if desired, and received there for further use (such as further processing).

### Example

In the referenced Agilent, model G2505 scanner, the subject methodology was employed. Arrays were scanned with two passes (back and forth) along the same row. Results for two color channels were simultaneously accounted for in which, for each channel, matching pixels were binned together and averaged to provide 5 micron pixel size results.

Through this routine, average system noise was reduced by nearly 1.8 in comparison to an approach where each scan row is scanned only once. To achieve this result, nearly double the time was required because two scans were run for every successive 5 micron step across the array.

In view of the discussion above, such a doubling of scanning measurements should account for approximately only a 1.41 times reduction in noise (random error reduction). Instead, the invention eliminates some systematic error, thereby achieving (in this example) roughly 27% improvement in error reduction over expected noise improvement for doubling scanning samples.

Looked at another way, in order to simply make a random error improvement of the magnitude experienced, more than three successive scans of a given line would need to have be run. (Three scans would potentially offer a random error correction factor of about 1.73, whereas four scans would offer an improvement by a factor of 2.) Clearly, the approach of the present invention is more efficient than that. Running 3 scans for each line in order to approach the improvement offered by 2 scans with the present invention would result in a loss in efficiency of roughly 50% relative to that offered by one variation of the invention. Viewed in either manner, the improvement offered by the present invention is clear. The ability to cost-effectively reach lower detection limits while keeping scan time as low as possible at maximum system resolution cannot be overstated.

Though the invention has been described in reference to certain examples, optionally incorporating various features, the invention is not to be limited to the set-ups described. The invention is not limited to the uses noted or by way of the exemplary description provided herein. It is to be understood that the breadth of the present invention is to be limited only by the literal or equitable scope of the following claims. That being said, we claim:

## Claims

1. A method of scanning an array with an optical scanner, said method comprising:
scanning a first scan row of an array in a direction to produce a first set of readings comprising a plurality of pixel values,
rescanning said scan row in an opposite direction to produce a second set of readings comprising a plurality of pixel values, and
combining said sets of readings by binning matched-position pixel values together to produce a result, canceling systematic errors.

2. The method of claim 1, further comprising:
moving to a second row of said array, and
scanning said second row in the manner described in claim 1 for scanning said first scan row.

3. The method of claim 2, wherein said array is scanned in its entirety.

4. The method of claim 3, carried out on a biopolymer array.

5. A method comprising forwarding a result from scanning said array by a method of claims 1 to 4, from a first location to a second location.

6. The method of claim 5, where said second location is a remote location.

7. A method comprising receiving data representing a result from scanning said array by a method of claim 5.

8. An optical scanner system comprising:
a means for scanning a biopolymer array,
wherein said system is adapted to scan rows in reading said array, scanning each of said rows in one direction and back in an opposite direction.

9. A computer-readable medium embodying a program to direct an optical scanner system to perform a method of claims 1 to 4.

10. A computer-readable medium containing data representing array results, wherein said data is produced by a method of claims 1 to 4.
